# EUROPÄISCHE PATENTANMELDUNG

(11) **EP 3 327 432 A1**
(43) Veröffentlichungstag der Anmeldung: **30.05.2018**
(21) Anmeldenummer: 17203389.6
(22) Anmeldetag: 23.11.2017
(51) Int. Cl.: G01N 27/403

(54) **POTENTIOMETRISCHER GASSENSOR UMFASSEND EINER IONISCHEN FLÜSSIGKEIT UND VERFAHREN ZUR VERWENDUNG DAVON**

(30) Priorität: 25.11.2016 EP 16200735
(71) Anmelder: Leibniz-Institut für Plasmaforschung und Technologie e.V., 17489 Greifswald (DE)
(72) Erfinder: Brüser, Volker, 17489 Greifswald (DE); Sievers, Gustav, 17489 Greifswald (DE); Westphal, Dietrich, 17489 Greifswald (DE); Lawrenz, Uwe, 17493 Greifswald (DE)
(74) Vertreter: Seliger, Knut

(57) **Zusammenfassung**

Die Erfindung betrifft einen potentiometrischer Gassensor (10) aufweisend eine Messelektrode (20) und eine Referenzelektrode (30), eine zwischen der Messelektrode (20) und der Referenzelektrode (30) angeordnete poröse Matrix (40), in der eine ionische Flüssigkeit (50), insbesondere als Elektrolyt, aufnehmbar oder aufgenommen ist, wobei zumindest die Messelektrode (20) in Kontakt mit einem Messgas (60) ist oder bringbar ist, und wobei die Messelektrode (20) und die Referenzelektrode (30) dazu eingerichtet sind, dass bei Kontaktierung der Messelektrode (20) mit dem Messgas (60) eine elektrische Spannung zwischen der Messelektrode (20) und der Referenzelektrode (30) anliegt, die von der Konzentration des Messgases (60) abhängt, so dass die Konzentration des Messgases (60) mittels der elektrischen Spannung bestimmbar ist.

Die Erfindung betrifft weiterhin ein Verfahren zur Konzentrationsbestimmung eines Messgases (60) mittels des potentiometrischen Gassensors (10).

## Beschreibung

Die Erfindung betrifft einen elektrochemischen Gassensor.

Nach dem Stand der Technik sind verschiedene elektrochemische Gassensoren mit amperometrischem, potentiometrischem oder kapazitivem Messprinzip bekannt.

Insbesondere ergibt sich hieraus die Aufgabe, einen einfach und kostengünstig herstellbaren, sensitiven und klein dimensionierten Gassensor zur Verfügung zu stellen.

Diese Aufgabe wird durch den Gegenstand der Ansprüche 1 und 7 gelöst. Vorteilhafte Ausgestaltungen der Erfindung sind in den Unteransprüchen 2 bis 6 angegeben.

Ein erster Aspekt der Erfindung betrifft einen potentiometrischen Gassensor aufweisend eine Messelektrode und eine Referenzelektrode und eine zwischen der Messelektrode und der Referenzelektrode angeordnete poröse Matrix, in der eine ionische Flüssigkeit, insbesondere als Elektrolyt, aufnehmbar oder aufgenommen ist.

Dabei ist zumindest die Messelektrode in Kontakt mit einem Messgas oder ist in Kontakt mit einem Messgas bringbar, wobei die Messelektrode und die Referenzelektrode dazu eingerichtet sind, dass bei Kontaktierung der Messelektrode mit dem Messgas eine elektrische Spannung zwischen der Messelektrode und der Referenzelektrode anliegt, die von der Konzentration des Messgases abhängt, so dass die Konzentration des Messgases mittels der elektrischen Spannung bestimmbar ist.

Der potentiometrische Gassensor umfasst insbesondere zwei Elektroden, eine Messelektrode und eine Referenzelektrode, die beide durch einen lonenleiter (IL, auch als ionische Flüssigkeit bezeichnet) miteinander verbunden sind. Für die Referenzelektrode gibt es insbesondere zwei Varianten: 1) eine Metallelektrode, die mit einem Referenzgas in Kontakt steht oder 2) eine Metall/Metalloxid-Elektrode ohne zusätzliches Referenzgas.

An der Dreiphasengrenze Gasphase-Elektrode-Ionenleiter bzw. lonenleiter-Metall/Metalloxid stellen sich elektrochemische Gleichgewichte ein. Die Gleichgewichtseinstellung führt unmittelbar zur Bildung eines elektrischen Potentials in der Elektrode.

Gemessen wird eine elektrische Spannung, deren Wert von der Gaszusammensetzung (z.B. O₂) und der Temperatur abhängt.

Der potentiometrische Gassensor ist insbesondere dazu eingerichtet, im Bereich von 20 °C bis 150 °C zu arbeiten.

Der potentiometrische Gassensor ist insbesondere dazu eingerichtet, die Konzentration von Sauerstoff (O₂) zu bestimmen oder zu messen. Dabei ist das Messgas insbesondere Sauerstoff (O₂).

Insbesondere sind die Messelektrode und/ oder die Referenzelektrode poröse Metallelektroden.

Insbesondere ist die poröse Matrix eine dünne offenporige, elektronisch nicht leitende Matrixschicht, in deren Poren sich eine ionische Flüssigkeit (ionic liquid - IL) befindet und die den lonenleiter bildet.

Insbesondere ist die Referenzelektrode eine gasunabhängige Festreferenz.

Das elektrische Potential der Elektroden hängt von der Temperatur, der verwendeten Materialien und im Fall der Kombination Gasphase-Elektrode-Ionenleiter von der Gaszusammensetzung und im Fall der Kombination lonenleiter-Metall/Metalloxid (Referenzsystem) von der Metall/Metalloxid-Zusammensetzung ab. Das Metall ist hier die Elektrode.

Zwischen den beiden Elektroden wird eine Spannung gemessen, die von der Gaszusammensetzung abhängt.

Der Gassensor weist ein potentiometrisches Messprinzip auf. Das bedeutet, dass eine elektrische Spannung gemessen wird, die von der Gaskonzentration abhängt, wobei bei der Messung kein Strom fließt. Im Gegensatz zum amperometrischen Messprinzip sind hierfür nur zwei Elektroden notwendig, da die Gegenelektrode entfallen kann.

Gemäß einer Ausführungsform ist die poröse Matrix mittels einer Dünnschichttechnik, insbesondere physikalische Gasphasenabscheidung (Physical Vapor Deposition, PVD) oder plasmaunterstützte chemische Gasphasenabscheidung (Plasma Enhanced Chemical Vapor Deposion, PECVD), erzeugt.

Gemäß einer weiteren Ausführungsform ist die Messelektrode und/ oder die Referenzelektrode mittels einer Dünnschichttechnik, insbesondere physikalische Gasphasenabscheidung (Physical Vapor Deposition, PVD) oder plasmaunterstützte chemische Gasphasenabscheidung (Plasma Enhanced Chemical Vapor Deposion, PECVD), erzeugt.

Die physikalische Gasphasenabscheidung umfasst insbesondere Sputtermethoden.

Die Bestandteile Metallelektrode, poröse Matrixschicht (zur Aufnahme bzw. Fixierung der IL) und Metall/Metalloxid-Referenzelektrode können insbesondere mit plasmabasierten Verfahren erzeugt werden, um eine Miniaturisierbarkeit des Sensors zu erreichen. Die genannten Verfahren gewährleisten eine sehr gute Reproduzierbarkeit.

Gemäß einer weiteren Ausführungsform ist die Referenzelektrode als Metall/Metalloxid-Referenzelektrode aufweisend ein Metall und ein Metalloxid ausgestaltet, wobei insbesondere das Metalloxid mit der in der porösen Matrix befindlichen ionischen Flüssigkeit vermischt oder vermischbar ist.

Da die Metall/Metalloxid-Zusammensetzung bei der Herstellung eingestellt wird und über die Lebensdauer des Sensors konstant bleibt, bleibt auch das elektrische Potential der Elektrode konstant und hängt nur noch von der Temperatur ab.

Gemäß einer weiteren Ausführungsform ist die Referenzelektrode mit einem Referenzgas in Kontakt oder ist mit einem Referenzgas in Kontakt bringbar, wobei insbesondere die Referenzelektrode luftdicht von der Umgebung des Gassensors abgeschlossen ist.

Gemäß einer weiteren Ausführungsform ist die poröse Matrix und/ oder die Messelektrode und/ oder die Referenzelektrode als eine Schicht ausgebildet, wobei insbesondere die Schicht eine Schichtdicke von 50 nm bis 1 µm aufweist.

Die Schichten werden insbesondere auf einem chemisch inerten nicht elektrisch leitenden Trägersubstrat aufgebracht (z.B. Al₂O₃- oder SiO₂-Platte).

Gemäß einer weiteren Ausführungsform weist der Gassensor die folgende Konfiguration auf:
- Gasphase(I)-Elektrode(I)-Ionenleiter-Elektrode(II)-Gasphase(II);
- die Gasphase (I) enthält das zu messende Gas (z.B. O₂), und die Gasphase(II) ist die Referenzgasphase, deren Zusammensetzung konstant bleibt (das ist zum Beispiel bei der Verwendung von Luft gegeben, in der die Sauerstoffkonzentration mit 20,6 % konstant ist),
- beide Gase werden räumlich voneinander getrennt.

Gemäß einer weiteren Ausführungsform weist der Gassensor die folgende Konfiguration auf:
- Gasphase(I)-Elektrode(I)-Ionenleiter-Metall/Metalloxid(II),
- die Gasphase (I) enthält das zu messende Gas (z.B. O₂) und das Metall/Metalloxid wird von der Gasphase (I) getrennt.

Gemäß einem zweiten Aspekt der Erfindung wird ein Verfahren zur Konzentrationsbestimmung eines Messgases mittels eines potentiometrischen Gassensors nach dem ersten Aspekt der Erfindung zur Verfügung gestellt. Bei dem Verfahren wird die Messelektrode in Kontakt mit einem Messgas gebracht, so dass eine elektrische Spannung zwischen der Messelektrode und der Referenzelektrode anliegt, wobei die elektrische Spannung zwischen der Messelektrode und der Referenzelektrode gemessen wird, und wobei mittels der gemessenen Spannung die Konzentration des Messgases bestimmt wird.

Die Erfindung wird im Folgenden anhand von Figuren beschrieben, aus denen weitere Merkmale und Ausführungsformen abgeleitet werden können.

Es zeigen
- Fig. 1: eine erste Ausführungsform des erfindungsgemäßen Gassensors in einer planaren Form im Querschnitt;
- Fig. 2: die erste Ausführungsform des Gassensors in einer Draufsicht;
- Fig. 3: eine zweite Ausführungsform des erfindungsgemäßen Gassensors;

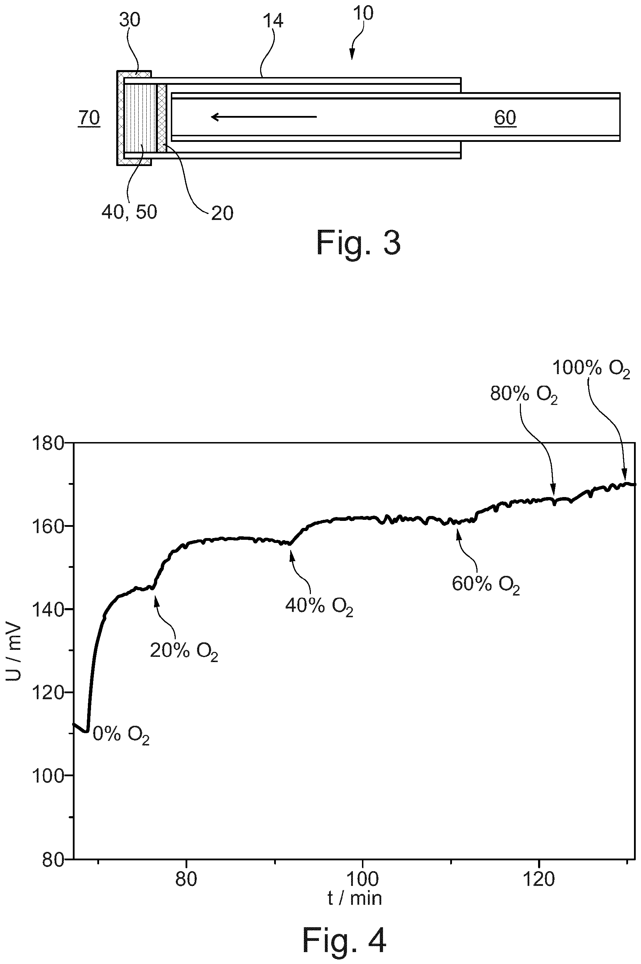

- Fig. 3: eine Zeit/Spannungskurve, die mit dem erfindungsgemäßen Gassensor aufgenommen wurde;

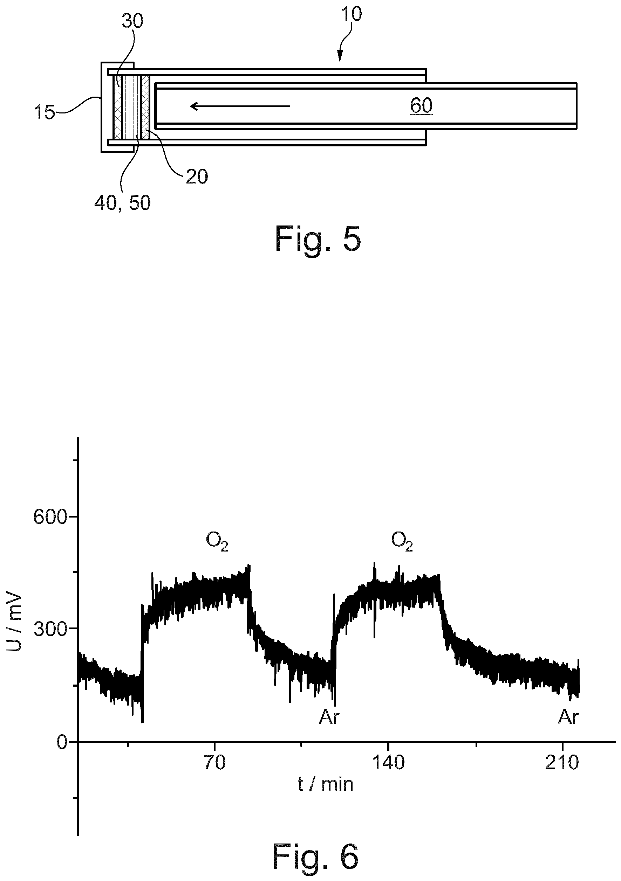

- Fig. 5: eine dritte Ausführungsform des erfindungsgemäßen Gassensors;
- Fig. 6: eine weitere Zeit/Spannungskurve, die mit dem erfindungsgemäßen Gassensor aufgenommen wurde.

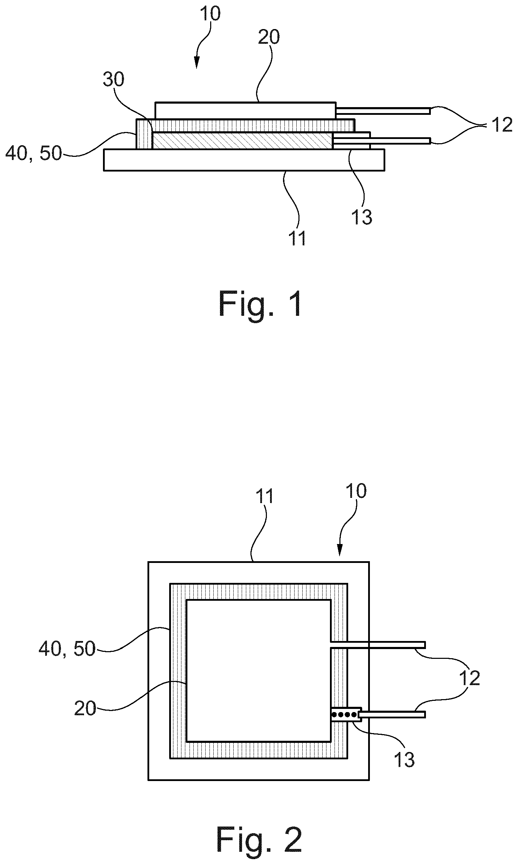

Die Figur 1 zeigt eine erste Ausführungsform des erfindungsgemäßen Gassensors 10 in einer planaren Form im Querschnitt und die Figur 2 zeigt die erste Ausführungsform des Gassensors 10 in einer Draufsicht.

Der Gassensor 10 weist eine erste Schicht eines chemisch inerten, nichtleitenden Trägersubstrats 11 (z.B. eine Al₂O₃- oder SiO₂-Platte) auf, auf welcher eine zweite Schicht angeordnet ist, die eine Metall/Metalloxid-Referenzelektrode 30 bildet. Auf der zweiten Schicht ist eine dritte Schicht einer porösen Matrix 40 angeordnet, in der eine ionische Flüssigkeit 50 als Elektrolyt aufgenommen ist.

Die poröse Matrix 40 ist insbesondere durch eine poröse keramische oder polymere Schicht (z.B. Al₂O₃, SiO₂, PE oder Silikon) gebildet. Weiterhin ist die poröse Matrix 40 insbesondere derart auf der Referenzelektrode 30 angeordnet, dass sie die Referenzelektrode 30 nach außen hin verschließt, so dass kein Gas aus der Umgebung des Gassensors 10 in direkten Kontakt mit der Referenzelektrode 30 treten kann.

Auf der dritten Schicht ist eine weitere vierte Schicht angeordnet, die eine Messelektrode 20, insbesondere aus Nickel, bildet. Die Messelektrode 20 steht in direktem Kontakt mit der Umgebung des Gassensors 10, so dass ein Messgas 60 aus der Umgebung zu der Messelektrode 20 gelangen kann.

Die Messelektrode 20 und die Referenzelektrode 30 sind jeweils mit einer Potentialableitung 12 elektrisch leitend verbunden, so dass die elektrische Spannung bzw. das elektrische Potential zwischen der Messelektrode 20 und der Referenzelektrode 30 über eine mit den Potentialableitungen 12 elektrisch verbundene Potentialmesseinrichtung (nicht gezeigt) messbar ist. Dabei weist die mit der Referenzelektrode 30 verbundene Potentialableitung 12 eine elektrische Isolierung 13, insbesondere gegenüber der porösen Matrix 40, auf.

Durch die Messung des Potentials zwischen der Messelektrode 20 und der Referenzelektrode 30 kann die Konzentration eines Messgases 60 in der Umgebung des Gassensors 10 bestimmt werden.

Durch die erste Ausführungsform ist ein Sensoraufbau nach der Variante Messgas 60 (bzw. Gasphase(I)) - Messelektrode 20 (bzw. Elektrode(I)) - ionische Flüssigkeit 50 (bzw. lonenleiter) - Referenzelektrode 30 (bzw. Metall/Metalloxid(II)) realisiert.

Die Figur 3 zeigt eine zweite Ausführungsform des erfindungsgemäßen Gassensors 10 im Querschnitt. Der Gassensor 10 weist ein Glasrohr 14 auf, in dem ein Messgas 60, insbesondere O₂, in Pfeilrichtung strömt. An einem Ende des Glasrohres 14 ist eine Messelektrode 20 angeordnet, die mit dem Strom des Messgases 60 in Kontakt steht. Weiterhin ist eine Referenzelektrode 30, insbesondere eine Außenelektrode, vorgesehen, die mit der Umgebung des Gassensors 10 in Kontakt steht, so dass ein in der Umgebung befindliches Referenzgas 70, insbesondere Außenluft, mit der Referenzelektrode 30 in Kontakt steht. Zwischen der Messelektrode 20 und der Referenzelektrode 30 ist eine poröse Matrix 40, insbesondere ein Silicagel, vorgesehen, in der eine ionische Flüssigkeit 50, insbesondere IL-016 (BMIM 155371-19-0, bzw. 1-Butyl-3-methylimidazolium hexafluorophosphat), aufgenommen ist.

Durch Messung der Potentialdifferenz zwischen Messelektrode 20 und Referenzelektrode 30 kann die Konzentration des Messgases 60 bestimmt werden.

Der in Figur 3 gezeigte Gassensor 10 kann insbesondere bei Raumtemperatur und Atmosphärendruck betrieben werden.

Durch die in Figur 3 gezeigte Ausführungsform ist ein Sensoraufbau nach der Variante Messgas 60 (bzw. Gasphase(I)) - Messelektrode (bzw. Elektrode(I)) - ionische Flüssigkeit 50 (bzw. lonenleiter) - Referenzelektrode 30 (bzw. Elektrode(II)) - Referenzgas 70 (bzw. Gasphase(II)) realisiert. Mit dem in Figur 3 gezeigten Sensoraufbau konnte eine Abhängigkeit des Messsignals von der O₂-Konzentration nachgewiesen werden (siehe Fig. 4). Es wurde festgestellt, dass die Funktionsweise insbesondere bei der Verwendung von Nickel als Elektrodenmaterial gegeben ist.

Die Figur 4 zeigt die Abhängigkeit der Spannung (bzw. des Potentials zwischen der Messelektrode 20 und der Referenzelektrode 30) des in Fig. 3 gezeigten Gassensors 10 von der O₂-Konzentration im Messgas 60, als Referenzgas 70 wurde die Außenluft verwendet.

Die Figur 5 zeigt eine dritte Ausführungsform des erfindungsgemäßen Gassensors 10 im Querschnitt. Der Gassensor 10 gemäß der dritten Ausführungsform weist bis auf die Referenzelektrode 30 (bzw. Außenelektrode) einen identischen Aufbau wie die in Fig. 3 gezeigte zweite Ausführungsform auf. Statt der in Fig. 3 gezeigten Außenelektrode ist eine Verschlusskappe 15 vorgesehen, die den Gassensor 10 gegenüber der Umgebung abschließt. Innerhalb der Verschlusskappe 15 ist eine Referenzelektrode 30 angeordnet, die als Metall/Metalloxid-Referenzelektrode ausgebildet ist.

In einem Glasrohr des Gassensors 10 strömt ein Messgas 60, insbesondere ein Gemisch aus O₂ und Argon, in Pfeilrichtung, wobei an einem Ende des Glasrohres eine Messelektrode 20 vorgesehen ist, die mit dem Messgasstrom in Kontakt steht. Zwischen der Messelektrode 20 und der Referenzelektrode 30 ist eine poröse Matrix 40 angeordnet, in der eine ionische Flüssigkeit 50 aufgenommen ist.

Durch die dritte Ausführungsform ist ein Sensoraufbau nach der Variante Messgas 60 (bzw. Gasphase(I)) - Messelektrode 20 (bzw. Elektrode(I)) - ionische Flüssigkeit 50 (bzw. lonenleiter) - Referenzelektrode 30 (bzw. Metall/Metalloxid(II)) realisiert.

Bei dem in der Figur 5 gezeigten Sensoraufbau wurde statt Außenluft als Referenzgas 70 eine Ni/NiO-Elektrode als Referenzelektrode 30 (bzw. Referenzsystem) in Kombination mit einem Ni-Netz eingesetzt. Hierzu wurde in die ionische Flüssigkeit 50 (IL) NiO mit eingemischt (wt150 + wt10 SiO₂ zur Verfestigung der Paste). Die Paste wurde auf eine Nickelelektrode gebracht und die Nickelelektrode luftdicht verschlossen. Als Messelektrode 20 wurde eine Nickelelektrode oben aufgelegt.

Der in Figur 5 gezeigte Sensor kann auf einfache Weise in eine planare Form überführt werden (siehe Fig. 1). Die Funktionsweise hängt vor allem von den verwendeten Materialien ab und nicht von der Form.

In Fig. 6 ist die O₂-Abhängigkeit einer O₂ -Messzelle mit Ni/NiO als Referenzsystem (siehe Fig. 5) gezeigt. Daraus ist die Abhängigkeit des Potentials von der O₂ -Konzentration ersichtlich. Die Potentialdifferenz ist sehr gut reproduzierbar und der Drift ist deutlich geringer als bei den anderen Zellkonfigurationen mit Luft als Referenzgas 70.

**Bezuaszeichenliste**

| | |
|---|---|
| Potentiometrischer Gassensor | 10 |
| Trägersubstrat | 11 |
| Potentialableitungen | 12 |
| Elektrische Isolierung | 13 |
| Glasrohr | 14 |
| Verschlusskappe | 15 |
| Messelektrode | 20 |
| Referenzelektrode | 30 |
| Poröse Matrix | 40 |
| Ionische Flüssigkeit | 50 |
| Messgas | 60 |
| Referenzgas | 70 |

## Patentansprüche

1. Potentiometrischer Gassensor (10) aufweisend
• eine Messelektrode (20) und eine Referenzelektrode (30),
• eine zwischen der Messelektrode (20) und der Referenzelektrode (30) angeordnete poröse Matrix (40), in der eine ionische Flüssigkeit (50), insbesondere als Elektrolyt, aufnehmbar oder aufgenommen ist,
wobei zumindest die Messelektrode (20) in Kontakt mit einem Messgas (60) ist oder bringbar ist, und wobei die Messelektrode (20) und die Referenzelektrode (30) dazu eingerichtet sind, dass bei Kontaktierung der Messelektrode (20) mit dem Messgas (60) eine elektrische Spannung zwischen der Messelektrode (20) und der Referenzelektrode (30) anliegt, die von der Konzentration des Messgases (60) abhängt, so dass die Konzentration des Messgases (60) mittels der elektrischen Spannung bestimmbar ist.

2. Potentiometrischer Gassensor (10) nach Anspruch 1, **dadurch gekennzeichnet, dass** die Referenzelektrode (30) mit einem Referenzgas (70) in Kontakt ist oder bringbar ist, wobei insbesondere die Referenzelektrode (30) luftdicht von der Umgebung des Gassensors (10) abgeschlossen ist.

3. Potentiometrischer Gassensor (10) nach Anspruch 1 oder 2, **dadurch gekennzeichnet, dass** die Referenzelektrode (30) als Metall/Metalloxid-Referenzelektrode aufweisend ein Metall und ein Metalloxid ausgestaltet ist, wobei insbesondere das Metalloxid mit der in der porösen Matrix (40) befindlichen ionischen Flüssigkeit (50) vermischt oder vermischbar ist.

4. Potentiometrischer Gassensor (10) nach einem der vorhergehenden Ansprüche, **dadurch gekennzeichnet, dass** die poröse Matrix (40) mittels einer Dünnschichttechnik, insbesondere physikalische Gasphasenabscheidung oder plasmaunterstützte chemische Gasphasenabscheidung, erzeugt ist.

5. Potentiometrischer Gassensor (10) nach einem der vorhergehenden Ansprüche, **dadurch gekennzeichnet, dass** die Messelektrode (20) und/ oder die Referenzelektrode (30) mittels einer Dünnschichttechnik, insbesondere physikalische Gasphasenabscheidung oder plasmaunterstützte chemische Gasphasenabscheidung, erzeugt ist.

6. Potentiometrischer Gassensor (10) nach einem der vorhergehenden Ansprüche, **dadurch gekennzeichnet, dass** die poröse Matrix (40) und/ oder die Messelektrode (20) und/ oder die Referenzelektrode (30) als eine Schicht ausgebildet ist, wobei insbesondere die Schicht eine Schichtdicke von 50 nm bis 1 µm aufweist.

7. Verfahren zur Konzentrationsbestimmung eines Messgases (60) mittels eines potentiometrischen Gassensors (10) nach einem der Ansprüche 1 bis 6, wobei die Messelektrode (20) in Kontakt mit einem Messgas (60) gebracht wird, so dass eine elektrische Spannung zwischen der Messelektrode (20) und der Referenzelektrode (30) anliegt, und wobei die elektrische Spannung zwischen der Messelektrode (20) und der Referenzelektrode (30) gemessen wird, und wobei mittels der gemessenen Spannung die Konzentration des Messgases (60) bestimmt wird.
